Europäisches Patentamt

(19) European Patent Office (11) Numéro de publication: **0 087 355 B1**

Office européen des brevets

(12) **FASCICULE DE BREVET EUROPEEN**

(45) Date de publication du fascicule du brevet: (51) Int. Cl.⁴: **G 01 S 13/44**
22.04.87

(21) Numéro de dépôt: 83400300.6

(22) Date de dépôt: 11.02.83

(54) **Procédé de mesure du site d'une cible à basse altitude dans un récepteur radar monopulse, et récepteur radar monopulse mettant en oeuvre un tel procédé.**

(30) Priorité: **19.02.82 FR 8202790**

(43) Date de publication de la demande:
**31.08.83 Bulletin 83/35**

(45) Mention de la délivrance du brevet:
**22.04.87 Bulletin 87/17**

(84) Etats contractants désignés:
**DE GB IT NL**

(56) Documents cités:
**INTERNATIONAL CONFERENCE ON RADAR PRESENT AND FUTURE, 23-25 octobre 1973, pages 160-165, Londres, GB. P. R. DAX: "Accurate tracking of low elevation targets over the sea with a monopulse radar"**
**IEEE TRANSACTIONS ON AEROSPACE AND ELECTRONIC SYSTEMS, vol. AES-7, no. 6, novembre 1971, pages 1123-1130, New York, USA. P. Z. PEEBLES: "Multipath angle error reduction using multiple-target methods"**
**IEEE TRANSACTIONS ON AEROSPACE AND ELECTRONIC SYSTEMS, vol. AES-7, no 1, janvier 1971, pages 160-170, New York, USA. S. M. SHERMAN: "Complex indicated angles applied to unresolved radar targets and multipath"**

(73) Titulaire: **THOMSON-CSF, 173, Boulevard Haussmann, F-75379 Paris Cedex 08 (FR)**

(72) Inventeur: **Aubry, Claude, THOMSON-CSF SCPI 173, bld. Haussmann, F-75379 Paris Cedex 08 (FR)**
Inventeur: **Casseau, Daniel, THOMSON-CSF SCPI 173, bld. Haussmann, F-75379 Paris Cedex 08 (FR)**
Inventeur: **Roger, Joseph, THOMSON-CSF SCPI 173, bld. Haussmann, F-75379 Paris Cedex 08 (FR)**
Inventeur: **Vergnory-Mion, Robert, THOMSON-CSF SCPI 173, bld. Haussmann, F-75379 Paris Cedex 08 (FR)**

ACTORUM AG

## Description

La présente invention concerne un procédé de mesure du site d'une cible à basse altitude dans un radar monopulse et un récepteur radar monopulse mettant en œuvre un tel procédé.

La mesure du site d'une cible à basse altitude est rendue difficile par les perturbations engendrées par la réflexion des échos de cible sur le sol ou la surface de la mer. Les échos reçus par l'antenne radar semblent alors venir de deux sources distinctes, la cible et son «image» par rapport à la surface du sol ou de la mer. Or ces deux sources sont pratiquement cohérentes, leur phase relative variant lentement. De plus les trajets parcourus par l'écho de cible et l'écho issu de l'image de la cible sont à peu près égaux.

Plusieurs solutions ont été envisagées pour tenter de s'affranchir de l'effet d'image, la plupart de ces solutions étant analysées dans l'article de D.K. BARTON «Low-Angle Radar Tracking» paru dans «Proceedings of the IEEE», vol. 62, N° 6, June 1974, pages 687–704. Ces solutions ont une efficacité plus ou moins contestable et en tout cas une difficulté certaine de mise en œuvre. En plus des solutions faisant appel à la résolution en distance et en vitesse ou à la diversité de fréquence, on peut mentionner les possibilités suivantes:

– augmentation du pouvoir séparateur par rétrécissement du faisceau radar. Mais cette solution est limitée par l'augmentation correspondante du diamètre de l'antenne à une fréquence donnée ou de la fréquence à diamètre d'antenne donné. ·

– atténuation du signal parasite image par dépointage du faisceau vers le ciel d'environ 0,8 largeur à 3 dB.

– utilisation de diagrammes spéciaux: la principale difficulté des procédés correspondants résidant dans la réalisation des diagrammes. De plus, dans la technique dite de la «voie écart», décrite dans le brevet français de Serge DRABOWITCH FR-A-1 366 828, il est indispensable de disposer de récepteurs aussi identiques que possible sur chacune des voies «somme», «différence» et «écart».

– méthode de «l'angle complexe» où l'on compare la mesure du rapport complexe «différence site/somme» à un ensemble de valeurs prédéterminées dans le plan complexe. Outre des problèmes d'ambiguïté délicats, cette méthode présente l'inconvénient de nécessiter des courbes de calibration dépendant fortement de l'environnement.

– procédés d'estimation des cibles multiples fondés sur le principe de la vraisemblance maximale. Ce type de procédé essentiellement théorique ne semble pas avoir donné lieu à des réalisations pratiques intéressantes.

Une autre technique a été décrite dans l'article de MM. D. GIULI et R. TIBERIO «A Modified Monopulse Technique for Radar Tracking with Low-Angle Multipath» paru dans IEEE trans. on AES, vol. 11, N° 5, Sept. 75, pages 741–748. Ce procédé exploite les informations obtenues simultanément par deux antennes à des hauteurs différentes, en supposant égaux les coefficients de réflexion des deux antennes. Cette technique présente donc l'inconvénient d'un système d'antenne complexe.

Le procédé et le récepteur, selon l'invention, pour la mesure du site d'une cible évoluant à basse altitude ne présentent pas les inconvénients précités puisqu'ils n'utilisent qu'une antenne monopulse et n'exigent aucune courbe de calibration liée à l'environnement.

La présente invention a pour objet un procédé de mesure ainsi qu'un récepteur de radar qui utilisent les diagrammes somme et différence site d'un radar d'écartométrie monopulse classique.

Le procédé selon l'invention pour la mesure du site d'une cible à basse altitude par un récepteur radar monopulse associé à une antenne qui présente des diagrammes de rayonnement de somme S (x) et de différence D (x) en site dans une direction de site x par rapport à l'axe de l'antenne est défini dans la revendication 1. Il comporte les étapes successives suivantes:

– une première étape d'élaboration par le récepteur radar d'un signal de somme et d'un signal de différence en site à partir des signaux reçus par l'antenne radar pointée dans une première direction;

– une deuxième étape de calcul du rapport complexe $m_1$ du signal de différence en site au signal de somme;

– une troisième étape dans laquelle l'axe de l'antenne radar est dépointé en conservant son gisement dans une deuxième direction faisant un angle $\theta$ avec la première direction;

– une quatrième étape d'élaboration d'un signal de somme et d'un signal de différence en site à partir des signaux reçus par l'antenne radar pointée dans la deuxième direction;

– une cinquième étape de calcul du rapport complexe $m_2$ du signal de différence en site au signal de somme; et

– une sixième étape de calcul des sites $\alpha$ de la cible et $\alpha'$ de son image exprimés en fonction de la largeur du faisceau d'antenne radar à 3 dB, par rapport à la première direction de pointage de l'antenne radar, par solution de l'équation complexe:

$$A(\alpha, \alpha')m_1 m_2 + B(\alpha, \alpha')m_1 + C(\alpha, \alpha')m_2 + E(\alpha, \alpha') = 0$$

où A, B, C, E sont des fonctions connues, réelles, symétriques en $\alpha$ et $\alpha'$ du rayonnement de l'antenne radar sur la voie de somme S(x) et la voie de différence D(x) en site dans la direction de site x par rapport à l'axe de l'antenne, telles que:

$$(\alpha - \alpha'). A(\alpha, \alpha') = S(\alpha). S(\alpha' + \theta) - S(\alpha + \theta). S(\alpha')$$
$$(\alpha - \alpha'). B(\alpha, \alpha') = D(\alpha + \theta). S(\alpha') - S(). D(\alpha' + \theta)$$
$$(\alpha - \alpha'). C(\alpha, \alpha') = S(\alpha + \theta). D(\alpha') - D(\alpha). S(\alpha' + \theta)$$
$$(\alpha - \alpha'). E(\alpha, \alpha') = D(\alpha). D(\alpha' + \theta) - D(\alpha + \theta). D(\alpha').$$

L'invention a également pour objet un récepteur radar monopulse tel que défini dans la revendication 2.

La présente invention sera mieux comprise à la lecture de la description détaillée faite ci-après avec référence aux figures ci-annexées qui représentent:

– la figure 1, un schéma synoptique du récepteur radar monopulse selon l'invention;

– la figure 2, un schéma montrant la définition des angles de site; et

– la figure 3, un mode de réalisation détaillé d'une partie du récepteur radar monopulse de la figure 1.

Dans la suite de la description on suppose que les diagrammes voies somme et différence site de l'antenne monopulse utilisée sont parfaitement connus et que le récepteur fournit de façon parfaite les composantes en phase et en quadrature du rapport du signal différence site/signal somme.

Ces deux hypothèses sont valables pour deux pointages successifs en site de l'antenne monopulse.

Le problème à résoudre est le suivant: On désire, à partir de deux pointages successifs en site de l'antenne monopulse dépointés en site d'un angle $\theta$ et fournissant deux mesures successives $m_1$ et $m_2$ du rapport complexe du signal différence site/signal somme, calculer le site $\alpha$ de la cible et le site $\alpha'$ de son image, de même gisement par rapport à une référence telle que l'axe de l'antenne en supposant les diagrammes d'antenne parfaitement connus.

Dans un premier temps, l'étude est faite en l'absence de bruit afin d'aboutir à une formulation générale et est ensuite complétée par l'étude de l'influence du bruit thermique et de la réflexion diffuse, ainsi que de l'effet des variations, de phase essentiellement, du coefficient de réflexion spéculaire et des défauts de l'antenne et du récepteur sur la solution obtenue avec les simplifications mentionnées ci-dessus.

Dans l'étude ci-après, on désigne par

– $\alpha$ et $\alpha'$ le site de la cible et de son image respectivement exprimés en largeur à 3 dB par rapport à l'axe de l'antenne au premier pointage, le gisement commun étant supposé connu;

– Z et Z' les amplitudes complexes des signaux échos, renvoyés par la cible et son image respectivement, que recevrait une antenne de référence, par exemple isotrope, et z leur rapport $\dfrac{Z'}{Z}$;

– S(x) le champ rayonné par l'antenne, pour la voie somme, dans la direction définie par un site x par rapport à l'axe d'antenne;

– D(x) le champ rayonné par l'antenne, pour la voie différence site, dans la direction définie par un site x par rapport à l'axe d'antenne;

– $\theta$ la différence des sites des deux directions de pointage successives $A_1$, $A_2$ de l'antenne ($\theta$ positif ou négatif);

– $y_1$ et $y_2$, respectivement $y_3$ et $y_4$, les signaux reçus sur la voie somme et la voie différence site pour la première, respectivement deuxième, direction de pointage de l'antenne monopulse;

– $m_1$ et $m_2$ les rapports $\dfrac{y_2}{y_1}$ et $\dfrac{y_4}{y_3}$ respectivement

du signal reçu sur la voie différence site au signal reçu sur la voie somme pour les deux directions de pointage $A_1$ et $A_2$.

On suppose dans la suite de la description que

le rapport $z = \dfrac{Z'}{Z}$ est invariant d'une mesure à l'autre. Dans l'hypothèse où le champ re-rayonné par la cible est le même dans la direction du radar et dans la direction de son image, ce rapport représente le coefficient de réflexion spéculaire complexe de la mer. Les variations de ce coefficient de réflexion résultent essentiellement de celles de la différence de marche entre les rayons direct et réfléchi. La vitesse de variation de cette différence de marche est liée à la trajectoire et à la vitesse de la cible ainsi qu'à la hauteur de l'antenne du radar au dessus de la mer. L'étude de ces variations ne fait pas l'objet de l'invention et n'est pas décrite ici.

Les signaux reçus yi (i = 1...4) s'écrivent, en fonction des diagrammes de l'antenne, fonctions des sites $\alpha$ et $\alpha'$ de la cible et de son image par rapport à la première direction de pointage de l'axe de l'antenne:

$$y_1 = ZS(\alpha) + Z'S(\alpha') = Z[S(\alpha) + z\,S(\alpha')] \qquad (1)$$
$$y_2 = ZD(\alpha) + Z'D(\alpha') = Z[D(\alpha) + zD(\alpha')] \qquad (2)$$
$$y_3 = ZS(\alpha + \theta) + Z'S'(\alpha' + \theta) = Z[S(\alpha + \theta) + z\,S(\alpha' + \theta)] \qquad (3)$$
$$y_4 = ZD(\alpha + \theta) + Z'D(\alpha' + \theta) = Z[D(\alpha' + \theta) + z\,D(\alpha' + \theta)] \qquad (4)$$

Par conséquent les mesures $m_1$ et $m_2$ des rapports $\dfrac{y_2}{y_1}$ et $\dfrac{y_4}{y_3}$ respectivement s'écrivent:

$$m_1 = \frac{D(\alpha) + zD(\alpha')}{S(\alpha) + zS(\alpha')} \qquad (5)$$

$$m_2 = \frac{D(\alpha + \theta) + zD(\alpha' + \theta)}{S(\alpha + \theta) + zS(\alpha' + \theta)} \qquad (6)$$

L'élimination de z entre ces deux équations (5) et (6) fournit la relation (7) suivante entre $m_1$, $m_2$, $\alpha$, $\alpha'$:

$$f\,(\alpha,\ \alpha',\ m,\ m_2) = A(\alpha,\ \alpha').\,m_1\,m_2 + B(\alpha,\ \alpha').m_1 + C(\alpha,\ \alpha').m_2 + E(\alpha,\ \alpha') = 0 \qquad (7)$$

où A($\alpha$, $\alpha'$), B($\alpha$, $\alpha'$), C($\alpha$, $\alpha'$), E($\alpha$, $\alpha'$) sont des fonctions connues des sites $\alpha$, $\alpha'$, telles que:

$$A(\alpha,\ \alpha') = S(\alpha).S(\alpha, + \theta) - S(\alpha + \theta).S(\alpha') \qquad (11)$$
$$B(\alpha,\ \alpha') = D(\alpha + \theta).S(\alpha') - S(\alpha).D(\alpha' + \theta) \qquad (12)$$
$$C(\alpha,\ \alpha') = S(\alpha + \theta).D(\alpha') - D(\alpha).S(\alpha' + \theta) \qquad (13)$$
$$E(\alpha,\ \alpha') = D(\alpha).D(\alpha' + \theta) - D(\alpha + \theta).D(\alpha') \qquad (14)$$

si l'on suppose connus les diagrammes somme et différence site de l'antenne monopulse.

On peut constater que A($\alpha'$, $\alpha$) = – A($\alpha$, $\alpha'$). Par conséquent on peut mettre ($\alpha - \alpha'$) en facteur dans A($\alpha$, $\alpha'$):

$$A(\alpha,\ \alpha') = (\alpha, - \alpha') \cdot A(\alpha,\ \alpha').$$

Il en est de même pour B($\alpha$, $\alpha'$), C($\alpha$, $\alpha'$) et E($\alpha$, $\alpha'$). Si bien qu'en éliminant le facteur commun ($\alpha - \alpha'$) l'équation à résoudre s'écrit:

$$g(\alpha, \alpha', m_1, m2) = A(\alpha, \alpha')m_1\, m_2 +$$
$$B(\alpha, \alpha')\, m_1 + C(\alpha, \alpha')\, m_2 + E(\alpha, \alpha') = 0 \qquad (10)$$

où les quatre fonctions A, B, C, E sont des fonctions réelles connues, symétriques en $\alpha$ et $\alpha'$ et peuvent s'exprimer au moyen de la somme $s = \alpha + \alpha'$ et du produit $p = \alpha.\alpha'$.

Le couple $(\alpha, \alpha')$, solution de la relation homographique complexe (10) ci-dessus, et solution du système des deux équations correspondant respectivement à l'annulation de la partie réelle Re(g) et de la partie imaginaire Im(g) de cette relation (10).

$$\text{Re }(g) = U(\alpha, \alpha', m_1, m_2) = 0 \qquad (8)$$
$$\text{Im }(g) = V(\alpha, \alpha', m_1, m_2) = 0 \qquad (9)$$

en l'absence de perturbations (bruit thermique, réflexion diffuse, défauts d'antenne et de récepteur).

L'une des hypothèses posées à la base de l'étude théorique ci-dessus concerne la connaissance des diagrammes d'antenne qui en réalité ne peut être qu'imparfaite.

Les diagrammes somme et différence site peuvent être approximés de façon grossière par des polynômes.

On peut montrer que dans ce cas l'expression du diagramme somme S(x) doit comporter en plus du terme constant un terme quadratique afin que la relation homographique (10) puisse fournir une indication sur $\alpha$ et $\alpha'$. De même une approximation linéaire du diagramme différence site n'est valable que dans un domaine angulaire réduit. On est donc amené à introduire un terme cubique dans le diagramme différence site D(x) et à envisager les approximations suivantes où K, $p_1$ et $p_2$ sont des paramètres réels:

$$S(x) = 1 - K \cdot x^2$$
$$D(x) = p_1 x + p_2 x^3$$

pour les diagrammes somme et différence site correspondant à un site x.

Le calcul des deux équations (8) et (9) mentionnées ci-dessus:

$$\text{Re}(g) = 0 \qquad (8)$$
$$\text{Im}(g) = 0 \qquad (9)$$

conduit à l'annulation d'un polynôme du second degré en p et s (p étant le produit et s la somme des deux inconnues $\alpha$ et $\alpha'$) dont les coefficients sont des fonctions compliquées des paramètres K, $p_1$, $p_2$, $\theta$ et des mesures complexes $m_1$ et $m_2$. Les inconnues auxiliaires p et s peuvent s'interpréter comme les coordonnées dans le plan complexe $C \times C$ d'un point réel sur une conique. Ce point est défini dans le plan réel $(R \times R)$ comme faisant partie de l'intersection de deux coniques. Il y a donc a priori quatre couples de solutions possibles. Compte tenu de la complexité des expressions en jeu, il est nécessaire d'utiliser un ordinateur pour effectuer tous les calculs. Dans ce cas, on peut envisager sans inconvénient toute modélisation des diagrammes d'antenne, utilisant ou non un polynôme et suffisamment proche des diagrammes réels.

L'approximation des diagrammes d'antenne par un polynôme ne peut s'appliquer que dans le cas d'une cible dont le site, par rapport à l'horizon, est notablement inférieur à la limite étroite de validité de l'approximation linéaire du diagramme différence site. Le domaine d'application est donc limité au voisinage de l'horizon, c'est-à-dire à une région où l'estimation du site est très perturbée. Si par conséquent on veut disposer pour le dépointage $\theta$ d'une plage de variation suffisante pour réduire l'effet du bruit thermique il faut étendre la zone de validité des modèles de diagrammes d'antenne et abandonner l'approximation par un polynôme.

On peut, selon un exemple non limitatif, représenter le diagramme différence site D(x), sur un domaine angulaire relativement large, par une fonction de Rayleigh:

$$D(x) = k.x.e^{\dfrac{-x^2}{\beta^2}}$$

Par souci d'homogénéité le diagramme somme S(x) peut être représenté par la fonction gaussienne

$$S(x) = e^{-1,4x^2}$$

où x est mesuré en largeur à 3 dB par rapport à l'axe d'antenne.

Les paramètres k et $\beta$ qui définissent le modèle différence site sont liés de façon simple au rayonnement maximum absolu M du diagramme différence correspondant à un site $\gamma$:

$$M = D(\gamma)$$
$$\beta = \gamma\sqrt{2}$$
$$k = \frac{M\sqrt{e}}{\gamma}$$

avec e = 2,71828. . .

Reconsidérons la relation homographique (10) en l'absence de perturbation (bruit thermique, réflexion diffuse, défauts d'antenne et de récepteur)

$$A(\alpha, \alpha')m_1m_2 + B(\alpha, \alpha')m_1 + C(\alpha, \alpha')m_2 +$$
$$E(\alpha,\alpha') = 0 \qquad (10)$$

avec:

$$(\alpha - \alpha')A(\alpha, \alpha') = S(\alpha)S(\alpha' + \theta) - S(\alpha + \theta)S(\alpha') \quad (11)$$
$$(\alpha - \alpha')B(\alpha, \alpha') = D(\alpha + \theta)S(\alpha') - S(\alpha)D(\alpha' + \theta) \quad (12)$$
$$(\alpha - \alpha')C(\alpha, \alpha') = S(\alpha + \theta)D(\alpha') - D(\alpha)S(\alpha' + \theta) \quad (13)$$
$$(\alpha - \alpha')E(\alpha, \alpha') = D(\alpha)D(\alpha' + \theta) - D(\alpha + \theta)D(\alpha') \quad (14)$$

où A, B, C, D sont des fonctions réelles, connues, symétriques en $\alpha$ et $\alpha'$.

Comme on l'a déjà mentionné, en annulant la partie réelle Re(g) et la partie imaginaire Im(g) de la relation homographique g(10), on obtient un système de deux équations transcendantes pour $\alpha$ et $\alpha'$:

$$\text{Re }(g) = U(\alpha, \alpha', m_1, m_2) = 0 \qquad (8)$$
$$\text{Im }(g) = V(\alpha, \alpha', m_1, m_2) = 0 \qquad (9)$$

L'ensemble des solutions de ce système peut s'interpréter dans le plan $\alpha \times \alpha'$ comme l'ensemble des points d'intersection des deux courbes d'équation U = 0 et V = 0. Cet ensemble n'est pas vide car le couple $(\alpha, \alpha')$ induisant $m_1$ et $m_2$ pour z donné est solution par construction. Lorsque z varie les courbes se déforment mais passent toutes par le point fixe $(\alpha, \alpha')$.

Le calcul du site α, et éventuellement de α', peut être réalisé par un calculateur spécialisé ou par un calculateur existant préalablement.

L'antenne monopulse utilisée peut être à balayage mécanique (telle qu'antenne du type à réflecteur, Cassegrain ou lentille), à balayage électronique ou bien à balayage mixte. Le faisceau monopulse site de cette antenne peut prendre deux positions prédéterminées dépointées l'une de l'autre de θ. Dans le cas d'une antenne à balayage électronique, la commande des deux pointages successifs est du ressort du calculateur-pointeur usuel. Dans le cas du balayage mécanique, les deux positions du faisceau peuvent être obtenues commodément par commutation électronique entre deux sources primaires monopulse étagées en site dans le plan de l'antenne et correspondant chacune à un pointage du faisceau.

D'après l'étude théorique du principe de l'invention exposée ci-dessus, le procédé de mesure du site d'une cible à basse altitude dans un récepteur radar monopulse équipé d'un calculateur de site se compose des phases successives suivantes:
— élaboration de premiers signaux hyperfréquence somme et différence site à partir des signaux reçus par l'antenne monopulse dont l'axe est pointé dans une première direction prédéterminée;
— changement de fréquence et amplification conventionnels des signaux somme et différence site;
— calcul de la partie réelle $Re(m_1)$ et de la partie imaginaire $Im(m_1)$ du rapport complexe $m_1$ du signal différence site au signal somme pour la première position de pointage d'antenne, données fournies ensuite au calculateur de site;
— dépointage de l'axe de l'antenne monopulse d'un angle θ depuis la première position;
— élaboration des deuxièmes signaux hyperfréquence somme et différence site à partir des signaux reçus par l'antenne monopulse dont l'axe est pointé dans la deuxième direction prédéterminée;
— changement de fréquence et amplification conventionnels des signaux somme et différence site;
— calcul de la partie réelle $Re(m_2)$ et de la partie imaginaire $Im(m_2)$ du rapport complexe $m_2$ du signal différence site au signal somme pour la deuxième position de pointage d'antenne, données fournies ensuite au calculateur de site;
— calcul par le calculateur de site du couple (α, α') de sites cible et image par résolution du système des deux équations (8) et (9) à deux inconnues.

Le calculateur de site reçoit en effet non seulement les mesures complexes $m_1$ et $m_2$ constituées par leur partie réelle et leur partie imaginaire mais également les modèles S (x) et D (x) choisis pour les diagrammes d'antenne monopulse en voie somme et en voie différence site.

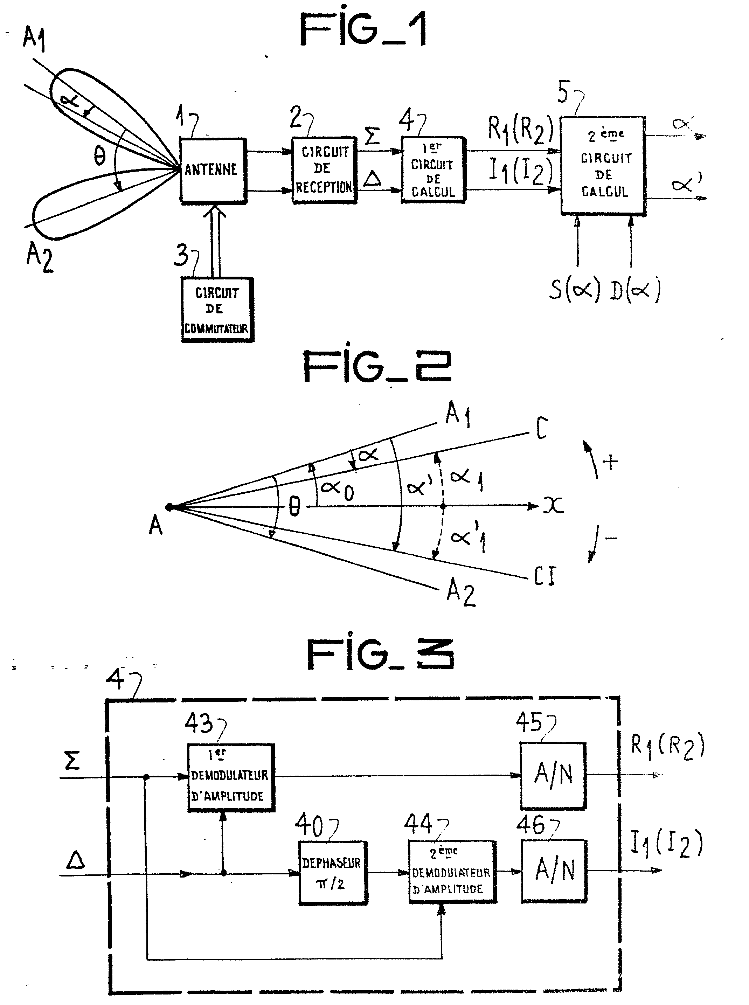

La figure 1 représente le schéma synoptique d'un récepteur radar monopulse pour la mesure de site d'une cible à basse altitude conformément à l'invention.

L'axe de l'antenne monopulse 1 à balayage électronique ou mécanique prend successivement une première puis une deuxième direction A1 puis A2 dépointées de θ, la commutation entre ces deux pointages étant commandée par un circuit de commutation 3. Les signaux hyperfréquence reçus par l'antenne 1 pointée dans la première direction $A_1$ sont traités dans le circuit de récepteur 2 qui délivre un signal $y_1$ sur la voie somme Σ et un signal $y_2$ sur la voie différence site Δ. Ces deux signaux alimentent un circuit 4 de calcul délivrant en sortie les données numériques $R_1$ et $I_1$ correspondant respectivement à la partie réelle et à la partie imaginaire du rapport complexe $m_1$ du signal $y_2$ sur la voie différence site Δ au signal $y_1$ sur la voie somme Σ. Un mode de réalisation détaillé du circuit de calcul 4 est représenté à titre d'exemple non limitatif sur la figure 3.

Les données numériques $R_1$ et $I_1$ élaborées par le premier circuit de calcul 4 sont introduites dans un deuxième circuit de calcul 5 qui peut être spécialisé ou utiliser un calculateur déjà existant (calculateur de site par exemple).
Le commutateur 3 pointe alors l'axe d'antenne dans la deuxième direction de pointage A2. Le même processus se répète et aboutit à l'élaboration de deux données numériques $R_2$ et $I_2$ correspondant également à la partie réelle et à la partie imaginaire respectivement du rapport complexe $m_2$ du signal $y_4$ sur la voie différence site Δ au signal $y_3$ sur la voie somme Σ générés par le circuit de réception 2 pour la deuxième direction de pointage A2 de l'antenne monopulse 1.

Ces deux nouvelles données $R_2$, $I_2$ sont également introduites dans le deuxième circuit de calcul 5 qui reçoit également les diagrammes sommes S (x) et différence site D (x) de l'antenne monopulse 1, l'angle x de site étant repéré par rapport à l'axe de l'antenne.

Le deuxième circuit de calcul 5 effectue le calcul exposé dans l'étude théorique ci-dessus, à savoir la résolution de l'équation complexe (10):
$$A(\alpha, \alpha')m_1 m_2 + B(\alpha, \alpha')m_1 + C(\alpha, \alpha')m_2 + E(\alpha, \alpha') = 0 \text{ avec:}$$
— $m_1$ et $m_2$, les deux mesures complexes du rapport des signaux reçus sur les voies Σ et Δ ayant donc comme partie réelle $R_1$ et $R_2$ et comme partie imaginaire $I_1$ et $I_2$ respectivement.
— A, B, C, E des fonctions connues, réelles et symétriques en α et α', sites de la cible et de son image par rapport à la même référence, choisie dans le mode de réalisation des figures 1 et 2 comme l'axe de l'antenne pointée dans la première direction A1, telles que:
$$(\alpha - \alpha')A(\alpha, \alpha') = S(\alpha)S(\alpha' + \theta) - S(\alpha + \theta)S(\alpha') \quad (11)$$
$$(\alpha - \alpha')B(\alpha, \alpha') = D(\alpha + \theta)S(\alpha') - S(\alpha)D(\alpha' + \theta) \quad (12)$$
$$(\alpha - \alpha')C(\alpha, \alpha') = S(\alpha + \theta)D(\alpha') - D(\alpha)S(\alpha' + \theta) \quad (13)$$
$$(\alpha - \alpha')E(\alpha, \alpha') = D(\alpha)D(\alpha' + \theta) - D(\alpha + \theta)D(\alpha') \quad (14)$$
La figure 2 précise la définition des angles de site et de pointage de l'antenne par rapport à la référence absolue choisie Ax.

Cette référence absolue peut être l'horizon par exemple. On appelle $\alpha_o$ le site de l'axe de l'antenne 1 pointée dans la première direction A1. Cette direction A1 connue sert de référence relative pour les sites $\alpha$ de la cible C et $\alpha'$ de son image C1 calculés par le deuxième circuit de calcul 5 de la figure 1, ainsi que pour l'angle $\theta$ dont est dépointé l'axe d'antenne lorsqu'il est commuté dans la direction A2. La cible a donc un site $\alpha$ par rapport à la référence relative A1 et $\alpha 1 = \alpha_o + \alpha$ par rapport à la référence absolue Ax, en l'occurrence l'horizon. L'image de la cible a un site $\alpha'$ par rapport à la référence relative A1 et $\alpha'1 = \alpha o + \alpha'$. Lors de la résolution de l'équation complexe (10) l'ambiguïté entre $\alpha$ et $\alpha'$ est levée si on convient de mesurer positivement dans le sens des sites croissants: $\alpha$ est alors algébriquement la plus grande des deux racines de l'équation.

La figure 3 représente un mode de réalisation détaillé non limitatif du premier circuit de calcul 4 de la figure 1, correspondant à un circuit de réception à traitement linéaire. Le circuit de réception 2 de la figure 1, non représenté sur la figure 3, comprend alors un premier sous-ensemble et un deuxième sous-ensemble de circuits conventionnels effectuant les changements de fréquence et l'amplification qui permettent de transposer les signaux hyperfréquence sur la voie somme $\Sigma$ et sur la voie différence site $\Delta$ respectivement en signaux à fréquence intermédiaire.

Les deux signaux voie somme $\Sigma$ et voie différence site $\Delta$ à fréquence intermédiaire ainsi obtenus sont ensuite appliqués à l'entrée du démodulateur d'amplitude 43 qui génère un premier signal analogique correspondant à la partie réelle du rapport des deux signaux. Le signal somme et le signal différence site, déphasé de $\frac{\pi}{2}$ par le circuit 40, alimentent le démodulateur d'amplitude 44 qui génère un deuxième signal analogique correspondant à la partie imaginaire du rapport des deux signaux somme et différence site.

Un convertisseur analogique/numérique 45, respectivement 46, transforme les premier et deuxième signaux analogiques respectivement en données numériques R1 ou R2, respectivement I1 ou I2, selon le pointage A1 ou A2 de l'axe d'antenne.

Selon un autre mode de réalisation (non représenté) on peut également utiliser un circuit de calcul 4 correspondant à un circuit de réception 2 dit à traitement de phase qui présente toutefois l'inconvénient d'introduire un bruit supplémentaire et de détériorer les performances du procédé décrit.

On a ainsi décrit un procédé de mesure du site d'une cible à basse altitude dans un récepteur radar monopulse et un récepteur radar monopulse mettant en oeuvre un tel procédé.

### Revendications

1. Procédé de mesure du site d'une cible à basse altitude par un récepteur radar monopulse associé à une antenne qui présente des diagrammes de somme S(x) et de différence D(x) en site, x étant le site repéré par rapport à l'axe de l'antenne, ce procédé comprenant successivement:

– une première étape d'élaboration de premiers signaux de somme et de différence en site à partir des signaux reçus par l'antenne radar dont l'axe est pointé dans une première direction;

– une deuxième étape de calcul du rapport complexe $m_1$ du premier signal de différence en site au premier signal de somme; le procédé étant caractérisé en ce qu'il comprend en outre:

– une troisième étape dans laquelle l'axe de l'antenne radar est dépointé, en conservant son gisement, dans une deuxième direction faisant un angle $\theta$ avec la première direction;

– une quatrième étape d'élaboration de deuxièmes signaux de somme et de différence en site à partir des signaux reçus par l'antenne radar pointée dans la deuxième direction;

– une cinquième étape de calcul du rapport complexe $m_2$ du deuxième signal de différence en site au deuxième signal de somme; et

– une sixième étape de calcul des sites $\alpha$ de la cible et $\alpha'$ de son image exprimés en fonction de la largeur du faisceau d'antenne radar à 3 dB, par rapport à la première direction de pointage de l'axe de l'antenne radar par solution de l'équation complexe:
$$A(\alpha, \alpha')m_1 m_2 + B(\alpha, \alpha')m_1 + C(\alpha, \alpha')m_2 + E(\alpha, \alpha') = 0$$
où A, B, C, E sont des fonctions connues, réelles, symétriques en $\alpha$ et $\alpha'$ du rayonnement de l'antenne radar sur la voie de somme S (x) et la voie de différence D (x) en site dans la direction de site x par rapport à l'axe de l'antenne, telles que:
$$(\alpha - \alpha') \cdot A(\alpha, \alpha') = S(\alpha)S(\alpha' + \theta) - S(\alpha + \theta)S(\alpha')$$
$$(\alpha - \alpha') \cdot B(\alpha, \alpha') = D(\alpha + \theta)S(\alpha') - S(\alpha)D(\alpha' + \theta)$$
$$(\alpha - \alpha') \cdot C(\alpha, \alpha') = S(\alpha + \theta)D(\alpha') - D(\alpha)S(\alpha' + \theta)$$
$$(\alpha - \alpha') \cdot E(\alpha, \alpha') = D(\alpha)D(\alpha' + \theta) - D(\alpha + \theta)D(\alpha').$$

2. Récepteur radar monopulse pour la mesure du site d'une cible à basse altitude, associé à une antenne qui rayonne dans une direction de site x par rapport à l'axe d'antenne, un champ S(x) pour la voie de somme et D(x) pour la voie de différence, comprenant un circuit de réception (2) qui génère à partir des signaux hyperfréquence reçus par l'antenne des signaux de somme et de différence en site et un premier moyen (4) de calcul de la partie réelle et de la partie imaginaire du rapport complexe du signal de différence en site au signal de somme, caractérisé en ce qu'il comprend:

– un moyen (3) de dépointage de l'antenne radar (1) pour pointer successivement l'axe de ladite antenne (1) dans une première direction (A1) puis dans une deuxième direction (A2) dépointée de la première (A1) d'un angle $\theta$; et

– un deuxième moyen (5) de calcul du site $\alpha$ de la cible et $\alpha'$ de son image à partir des premier et deuxième rapports complexes $m_1$ et $m_2$ des signaux de différence aux signaux de somme correspondant aux première et deuxième directions de pointage (A1, A2) de l'axe de l'antenne, et des diagrammes de rayonnement somme S(x) et différence site D(x) de l'antenne radar, le deuxième moyen de calcul (5) déterminant $\alpha$ et $\alpha'$ en résolvant l'équation:

$A(\alpha, \alpha')m_1 m_2 + B(\alpha, \alpha')m_1 + C(\alpha, \alpha')m_2 + E(\alpha,\alpha') = 0$

où A, B, C, E sont des fonctions connues, réelles, symétriques en $\alpha$ et $\alpha'$ du rayonnement de l'antenne radar sur la voie de somme S (x) et la voie de différence en site D (x) dans la direction de site x par rapport à l'axe de l'antenne, telles que:

$(\alpha - \alpha') \cdot A(\alpha, \alpha') = S(\alpha)S(\alpha' + \theta) - S(\alpha + \theta)S(\alpha')$
$(\alpha - \alpha') \cdot B(\alpha, \alpha') = D(\alpha + \theta)S(\alpha') - S(\alpha)D(\alpha' + \theta)$
$(\alpha - \alpha') \cdot C(\alpha, \alpha') = S(\alpha + \theta)D(\alpha') - D(\alpha)S(\alpha' + \theta)$
$(\alpha - \alpha') \cdot E(\alpha, \alpha') = D(\alpha)D(\alpha' + \theta) - D(\alpha + \theta)D(\alpha').$

3. Récepteur radar monopulse selon la revendication 2, caractérisé en ce que le circuit de réception (2) étant à traitement linéaire et délivrant des signaux de somme de différence en site transposés à fréquence intermédiaire et amplifiés, le premier moyen (4) de calcul comprend:

– un premier démodulateur d'amplitude (43) recevant sur ses première et deuxième entrées les signaux de somme et de différence en site à fréquence intermédiaire en sortie du circuit de réception (2);

– un deuxième démodulateur d'amplitude (44) recevant sur une première entrée le signal de somme à fréquence intermédiaire délivré par le circuit de réception (2) et sur une deuxième entrée le signal de différence en site à fréquence intermédiaire délivré par le circuit de réception (2) et déphasé de $\pi/2$ par un circuit (40); et

– un premier et un deuxième convertisseurs analogique-numérique (45, 46) codant le signal de sortie des premier et deuxième démodulateurs d'amplitude (43, 44) respectivement.

4. Récepteur radar monopulse selon l'une quelconque des revendications 2 ou 3, caractérisé en ce que, l'antenne radar (1) étant une antenne monopulse à balayage mécanique comprenant une première source primaire, une deuxième source primaire est disposée étagée en site avec la première source primaire dans le plan de ladite antenne (1), le moyen de dépointage (3) étant constitué par un circuit de commutation de la première source primaire à la deuxième.

5. Récepteur radar monopulse selon l'une quelconque des revendications 2 à 4, caractérisé en ce que l'antenne radar (1) étant une antenne monopulse à balayage électronique associée à un calculateur-pointeur, le moyen de dépointage (3) et le deuxième moyen de calcul (5) sont constitués par le calculateur-pointeur de l'antenne radar.

**Claims**

1. A method for measuring the elevation of a low altitude target in a monopulse radar receiver associated to an antenna presenting sum S(x) and difference diagrams D(x), x being the adjusted elevation with respect to the axis of the antenna, this method comprising successively:

– a first step of elaborating first elevation sum and difference signals on the basis of the signals received from the radar antenna, the axis of which is aligned along a first direction;

– a second step of calculating the complex ratio $m_1$ between the first elevation difference signal and the first sum signal;

characterized in that the method further comprises:

– a third step during which the axis of the radar antenna is dislocated to a second direction including with the first direction an angle $\theta$ while conserving its ground angle;

– a fourth step of elaborating second elevation sum and difference signals on the basis of the signals received from the radar antenna which is aligned along the second direction;

– a fifth step of calculating the complex ratio $m_2$ between the second elevation difference signal and the second sum signal;

– and a sixth step of calculating the elevation angle $\alpha$ of the target and the elevation angle $\alpha'$ of its image expressed in relation to the 3 dB beam width of the radar antenna with respect to the first direction of the radar antenna axis by solving the following complex equation:

$A(\alpha, \alpha')m_1 m_2 + B(\alpha, \alpha')m_1 + C(\alpha, \alpha')m_2 + E(\alpha, \alpha') = 0$

in which A, B, C, E are known real and symmetrical functions in $\alpha$ and $\alpha'$ of the radar antenna radiation on the sum channel S(x) and the difference channel D(x) in the elevation direction x with respect to the antenna axis, such that

$(\alpha - \alpha') \cdot A(\alpha, \alpha') = S(\alpha)S(\alpha' + \theta) - S(\alpha + \theta)S(\alpha')$
$(\alpha - \alpha') \cdot B(\alpha, \alpha') = D(\alpha + \theta)S(\alpha') - S(\alpha)D(\alpha' + \theta)$
$(\alpha - \alpha') \cdot C(\alpha, \alpha') = S(\alpha + \theta)D(\alpha') - D(\alpha)S(\alpha' + \theta)$
$(\alpha - \alpha') \cdot E(\alpha, \alpha') = D(\alpha)D(\alpha' + \theta) - D(\alpha + \theta)D(\alpha').$

2. A monopulse radar receiver for measuring the elevation angle of a low altitude target, associated to an antenna which emits in an elevation direction x with respect to the antenna axis a field S(x) for the sum channel and a field D(x) for the difference channel, the receiver comprising a reception circuit (2) deriving elevation sum signals and difference signals from the microwave signals received by the antenna, and a first means (4) for calculating the real part and the imaginary part of the complex ratio between the elevation difference signal and the sum signal, characterized in that it comprises:

– a means (3) for dislocating the radar antenna (1) in order to align successively the axis of said antenna along a first direction (A1) and then along a second direction (A2) dislocated with respect to the first one (A1) by an angle $\theta$;

– and a second means (5) for calculating the elevation angle $\alpha$ of the target and the elevation angle $\alpha'$ of its image on the basis of the first and second complex ratios $m_1$ and $m_2$ between the difference signals and the corresponding sum signals at the first and the second directions (A1, A2) of the antenna axis, and for calculating the radiation diagrams of the sum S(x) and the elevation difference D(x) of the radar antenna, the second calculation means (5) determining $\alpha$ and $\alpha'$ by solving the following equation:

$A(\alpha, \alpha')m_1 m_2 + B(\alpha, \alpha')m_1 + C(\alpha, \alpha')m_2 + E(\alpha, \alpha') = 0$

in which A, B, C, E are known real and symmetrical functions in $\alpha$ and $\alpha'$ of the radar antenna radiation on the sum channel S(x) and the difference channel D(x) in the elevation direction x with respect to the antenna axis, such that

$(\alpha-\alpha') \cdot A(\alpha, \alpha') = S(\alpha)S(\alpha'+\theta) - S(\alpha+\theta)S(\alpha')$
$(\alpha-\alpha') \cdot B(\alpha, \alpha') = D(\alpha+\theta)S(\alpha') - S(\alpha)D(\alpha'+\theta)$
$(\alpha-\alpha') \cdot C(\alpha, \alpha') = S(\alpha+\theta)D(\alpha') - D(\alpha)S(\alpha'+\theta)$
$(\alpha-\alpha') \cdot E(\alpha, \alpha') = D(\alpha)D(\alpha'+\theta) - D(\alpha+\theta)D(\alpha')$.

3. A monopulse radar receiver according to claim 2, characterized in that, the reception circuit (2) performing a linear processing and delivering sum signals and elevation difference signals which are transposed to intermediate frequency and which are amplified, the first calculation means (4) includes:

– a first amplitude demodulator (43) receiving via its first and second inputs the sum and elevation difference signals at intermediate frequency originating from the reception circuit (2);

– a second amplitude demodulator (44) receiving via a first input the sum signals at intermediate frequency delivered by the reception circuit (2) and via a second input the elevation difference signal at intermediate frequency delivered by the reception circuit (2) and $\pi/2$ phase-shifted by a circuit (40);

– and a first and a second analog to digital converter (45, 46) coding the output signal of the first and second amplitude demodulators (43, 44) respectively.

4. A monopulse radar receiver according to any one of claims 2 or 3, characterized in that, the radar antenna (1) being a mechanically scanned monopulse antenna and comprising a first primary source, a second primary source is disposed at a distance in elevation direction from the first primary source in the plane of said antenna (1), the dislocation means (3) being constituted by a switch circuit switching from the first primary source to the second one.

5. A monopulse radar receiver according to any one of claims 2 to 4, characterized in that the radar antenna (1) being an electronically scanned monopulse antenna associated to a calculator-pointer, the dislocation means (3) and the second calculation means (5) are constituted by the calculator-pointer of the radar antenna.

**Patentansprüche**

1. Verfahren zur Messung der Elevation eines Ziels in geringer Höhe mittels eines Monopulsradarempfängers und einer zugeordneten Antenne, die Diagramme für die Summe S(x) und die Differenz D(x) des Elevationswinkels aufweist, wobei x der gemessene Elevationswert bezüglich der Achse der Antenne ist und das Verfahren nacheinander folgende Schritte umfasst:

– einen ersten Schritt der Erarbeitung erster Summen- und Differenzsignale der Elevationswerte ausgehend von den Empfangssignalen der Radarantenne, deren Achse in eine erste Richtung zeigt;

– einen zweiten Schritt, in dem das komplexe Verhältnis $m_1$ des ersten Elevationswinkel-Differenzsignals zum ersten Summensignal berechnet wird,

dadurch gekennzeichnet, dass das Verfahren ausserdem folgende Schritte aufweist:

– einen dritten Schritt, in dem die Radarantenne unter Beibehaltung des Bodenwinkels in eine zweite Richtung verstellt wird, die mit der ersten Richtung einen Winkel $\theta$ einschliesst;

– einen vierten Schritt der Erarbeitung zweiter Summen- und Differenzsignale des Elevationswinkels ausgehend von den von der in die zweite Richtung zeigenden Radarantenne empfangenen Signalen;

– einen fünften Schritt, in dem das komplexe Verhältnis $m_2$ des zweiten Elevationswinkel-Differenzsignals zum zweiten Summensignal berechnet wird;

– und einen sechsten Schritt, in dem der Elevationswinkel $\alpha$ des Ziels und der Elevationswinkel $\alpha'$ seines Bildes, ausgedrückt in Abhängigkeit von der 3 dB-Strahlbreite der Radarantenne bezüglich der ersten Richtung der Radarantennenachse durch Lösung der folgenden komplexen Gleichung berechnet wird:

$A(\alpha, \alpha')m_1 m_2 + B(\alpha, \alpha')m_1 + C(\alpha, \alpha')m_2 + E(\alpha, \alpha') = 0$

wobei A, B, C, E bekannte reelle und in $\alpha$ und $\alpha'$ symmetrische Funktionen der Strahlung der Radarantenne auf dem Summenkanal S(x) und dem Differenzkanal D(x) in der Elevationsrichtung x bezüglich der Achse der Antenne sind, derart, dass gilt:

$(\alpha-\alpha') \cdot A(\alpha, \alpha') = S(\alpha)S(\alpha'+\theta) - S(\alpha+\theta)S(\alpha')$
$(\alpha-\alpha') \cdot B(\alpha, \alpha' = D(\alpha+\theta)S(\alpha') - S(\alpha)D(\alpha'+\theta)$
$(\alpha-\alpha') \cdot C(\alpha, \alpha') = S(\alpha+\theta)D(\alpha') - D(\alpha)S(\alpha'+\theta)$
$(\alpha-\alpha') \cdot E(\alpha, \alpha') = D(\alpha)D(\alpha'+\theta) - D(\alpha+\theta)D(\alpha')$.

2. Monopuls-Radarempfänger für die Messung des Elevationswinkels eines Ziels in niedriger Höhe in Verbindung mit einer Antenne, die in eine Elevationsrichtung x bezüglich der Antennenachse ein Feld S(x) für den Summenkanal ein Feld D(x) für den Differenzkanal abstrahlt, mit einem Empfangskreis (2), der ausgehend von den von der Antenne empfangenen Mikrowellensignalen Summensignale und Differenzsignale für den Elevationswinkel erzeugt, und mit einem ersten Rechenmittel (4) zur Berechnung des reellen Teils und des imaginären Teils des komplexen Verhältnisses des Elevationswinkel-Differenzsignals zum Summensignal, dadurch gekennzeichnet, dass er enthält:

– ein Mittel (3) zur Richtungsänderung der Radarantenne (1), um nacheinander die Achse der Antenne (1) gemäss einer ersten Richtung (A1) und dann gemäss einer zweiten Richtung (A2) auszurichten, die sich von der ersten (A1) um einen Winkel $\theta$ unterscheidet,

– und ein zweites Rechenmittel (5) zur Berechnung des Elevationswinkels $\alpha$ des Ziels und des Elevationswinkels $\alpha'$ seines Bilds ausgehend von den beiden komplexen Verhältnissen $m_1$ und $m_2$ der Differenzsignale zu den entsprechenden Summensignalen in den beiden Richtungslagen (A1, A2) der Antennenachse und zur Berechnung der Strahlungsdiagramme bezüglich der Elevationswinkelsumme S(x) und der Differenz D(x) der Radarantenne, wobei das zweite Rechenmittel (5) die Werte von $\alpha$ und $\alpha'$ durch Lösung der folgenden Gleichung bestimmt:

$A(\alpha, \alpha')m_1 m_2 + B(\alpha, \alpha')m_1 + C(\alpha, \alpha')m_2 + E(\alpha, \alpha') = 0$

wobei A, B, C, E bekannte reelle und in $\alpha$ und $\alpha'$ symmetrische Funktionen der Strahlung der Radarantenne auf dem Summenkanal S(x) und dem Differenzkanal D(x) in der Elevationsrichtung x bezüglich der Achse der Antenne sind, derart, dass gilt:

$(\alpha-\alpha') \cdot A(\alpha, \alpha') = S(\alpha)S(\alpha'+\theta) - S(\alpha+\theta)S(\alpha')$
$(\alpha-\alpha') \cdot B(\alpha, \alpha') = D(\alpha+\theta)S(\alpha') - S(\alpha)D(\alpha'+\theta)$
$(\alpha-\alpha') \cdot C(\alpha, \alpha') = S(\alpha+\theta)D(\alpha') - D(\alpha)S(\alpha'+\theta)$
$(\alpha-\alpha') \cdot E(\alpha, \alpha') = D(\alpha)D(\alpha'+\theta) - D(\alpha+\theta)D(\alpha')$.

3. Monopuls-Radarempfänger nach Anspruch 2, dadurch gekennzeichnet, dass für einen Empfangskreis (2), der eine lineare Bearbeitung vornimmt und Summen- und Differenzsignale des Elevationswinkels nach Umsetzung in den Zwischenfrequenzbereich und Verstärkung liefert, das erste Rechenmittel (4) enthält:

– einen ersten Amplitudendemodulator (43), der an einem ersten und einem zweiten Eingang das Summensignal bzw. das Differenzsignal des Elevationswinkels als Zwischenfrequenzsignal empfängt, die vom Empfangskreis (2) ausgegeben werden,

– einen zweiten Amplitudendemodulator (44), der über einen ersten Eingang das vom Empfangskreis (2) gelieferte Summensignal als Zwischenfrequenzsignal und über einen zweiten Eingang das vom Empfangskreis (2) gelieferte und in einem Schaltkreis (40) um $\pi/2$ phasenverschobene Elevationswinkel-Differenzsignal als Zwischenfrequenzsignal zugeführt erhält;

– und einen ersten und einen zweiten Analog-Digital Wandler (45, 46), die das Ausgangssignal des ersten bzw. des zweiten Amplitudendemodulators (43, 44) kodieren.

4. Monopuls-Radarempfänger nach einem beliebigen der Ansprüche 2 oder 3, dadurch gekennzeichnet, dass für eine Radarantenne (1) die als Monopulsantenne mit mechanischem Schwenk ausgebildet ist und eine erste Primärquelle enthält, eine zweite Primärquelle in Elevationsrichtung versetzt zur ersten Primärquelle in der Ebene der Antenne (1) angeordnet ist, wobei das Mittel (3) zur Richtungsänderung der Antennenachse aus einem Kreis zur Umschaltung von einer Primärquelle zur anderen besteht.

5. Monopuls-Radarempfänger nach einem beliebigen der Ansprüche 2 bis 4, dadurch gekennzeichnet, dass für eine Radarantenne (1), die als Monopulsantenne mit elektronischem Schwenk in Verbindung mit einem Rechner-Zielgerät ausgerüstet ist, das Mittel zur Richtungsänderung (3) und das zweite Rechenmittel (5) vom Rechner-Zielgerät der Radarantenne gebildet werden.

# FIG_1

# FIG_2

# FIG_3